(19) Europäisches Patentamt
European Patent Office
Office européen des brevets

(11) Publication number: 0 018 099 A2

(12) EUROPEAN PATENT APPLICATION

(21) Application number: 80300914.1

(22) Date of filing: 24.03.80

(51) Int. Cl.³: B 01 F 17/52 // C09D7/02

(30) Priority: 05.04.79 GB 7911903

(43) Date of publication of application: 29.10.80 Bulletin 80/22

(84) Designated Contracting States: AT BE CH DE FR GB IT NL SE

(71) Applicant: IMPERIAL CHEMICAL INDUSTRIES LIMITED, Imperial Chemical House Millbank, London SW1P 3JF (GB)

(72) Inventor: Farkas, Ferenc Karoly, 19, Crabtree Close, Beaconsfield Buckinghamshire (GB)
Inventor: Naylor, Arthur John, 97, Roberts Ride, Hazlemere High Wycombe Buckinghamshire (GB)
Inventor: Nicks, Peter Francis, 36, Sherbourne Drive, Maidenhead Berkshire (GB)
Inventor: Sadler, John, 65, Cornwall Road, Bristol 7 Avon (GB)

(74) Representative: Kerr, Michael Arthur et al, Imperial Chemical Industries Limited Legal Department : Patents Thames House North Millbank, London SW1P 4QG (GB)

# (54) Pigment dispersants, pigment concentrates, and their use in aqueous coating compositions and printing inks.

(57) A polymeric water-dispensable pigment dispersant is prepared by interacting at a temperature not greater than 150°C.

(a) a carboxylic acid of structure $(R_1)(R_2)(R_3)C.COOH$ wherein $R_1$ and $R_2 = C_nH_{2n}X$, the same or different and wherein n = 1–8 and X is a group reactive with an isocyanate group, and wherein $R_3 = C_{1-8}$ alkyl,

(b) an aliphatic polyol, and

(c) a di- or tri-isocyanate.

Preferably the dispersant comprises a $C_{8-20}$ aliphatic hydrocarbon moiety.

The dispersant, which is used in the preparation of pigment concentrates, pigmented aqueous coating compositions and printing inks, is of improved hydrolytic stability and minimises pigment leaching under humid conditions.

EP 0 018 099 A2

30734/EP

PIGMENT DISPERSANTS, PIGMENT CONCENTRATES, AND THEIR USE IN AQUEOUS COATING COMPOSITIONS AND PRINTING INKS.

This invention relates to pigment dispersants; to dispersed pigment concentrates; and to aqueous pigmented coating compositions and printing inks in which the dispersed pigment concentrates may be used.

It is conventional for pigments to be dispersed in an aqueous medium, or in a medium miscible with water, with the aid of a pigment dispersant. It is desirable that the pigment dispersant used has good hydrolytic stability under the conditions of use or storage of the dispersion since hydrolysis of the dispersant may have an adverse effect on the paint, ink or other product in which it is used.

Dispersed pigment concentrates are commercially available which are suitable for use in tinting aqueous coating compositions which contain a film-forming material. However, the commercially available dispersed pigment concentrates often contain low molecular weight water-soluble dispersant constituents. When these concentrates are employed in the formulation of aqueous coating compositions such as emulsion paints, staining may occur on the surface of an applied coating which is subjected to conditions of high humidity (for example in a bathroom) due to the leaching of certain pigments.

We have now found that certain water dispersible polymers comprising urethane groups are very effective as pigment dispersants in aqueous medium; that they have good hydrolytic stability; and that they resist the leaching of

pigment from an applied coating under humid conditions.

According to this invention we provide a polymeric water-dispersible pigment dispersant which is prepared by interacting at a temperature of not greater than 150°C materials which comprise:

(a) a carboxylic acid of structure

$$\begin{array}{rcl} & R_1 & \\ & | & \\ R_3 - & C & - COOH \\ & | & \\ & R_2 & \end{array}$$

wherein $R_1$ and $R_2 = C_n H_{2n} X$, the same or different and wherein n = 1-8 and X is a group reactive with an isocyanate group, and wherein $R_3$ is a $C_{1-8}$ alkyl or substituted alkyl group,

(b) an aliphatic polyol, and

(c) a di- or tri-isocyanate

According to another aspect of this invention we provide a dispersed pigment concentrate which comprises water and/or a liquid miscible with water, pigment and a water-dispersible polymeric pigment dispersant prepared by interacting materials as defined above.

According to a further aspect of this invention we provide an aqueous pigmented coating composition which comprises water, pigment, a water-dispersible polymeric pigment dispersant prepared as defined above, and a coating material.

According to another aspect of this invention we provide an aqueous printing ink which comprises water, pigment, a water-dispersible polymeric pigment dispersant prepared as defined above and a film-forming material.

The group X may be for example a hydroxyl, amino, imino or mercapto group. Preferably X is a hydroxyl group. More preferably n = 1-3. In one preferred embodiment of the invention $R_1$ & $R_2$ are each $-CH_2OH$ and $R_3$ is $CH_3$, i.e. the carboxylic acid is dimethylolpropionic acid.

Preferably the polyol is a diol and suitable diols include ethylene glycol; propylene glycol; diethylene glycol; dipropylene glycol; poly(propylene glycols), for example of molecular weight in the range 300-2000 and poly (ethylene glycols); butane 1:4 diol; and hexane 1:6 diol. Other suitable polyols include glycerol, trimethylolpropane; trimethylol ethane; diphenylol propane; and pentaerythritol. Particularly suitable polyols are the poly(propylene glycols). Mixtures of polyols may be used. The triols and higher polyols may be used in the form of a monoester or polyester respectively, provided that two hydroxyl groups remain present.

Preferably the pigment dispersant also comprises a $C_{8-20}$ aliphatic hydrocarbon moiety, which may be derived from a natural oil, for example castor oil, soya bean oil, coconut oil, linseed oil, dehydrated castor oil and isomerised oils such as isomerised safflower oil. The hydrocarbon moiety may be saturated or unsaturated.

The hydrocarbon moiety may be introduced into the pigment dispersant by using a further reactant material (d), for example a natural oil such as castor oil, or a derivative thereof, for example a monoglyceride, or an adduct of ethylene oxide with an amine derived by hydrogenation from a natural fatty acid.

Alternatively the aliphatic hydrocarbon moiety may be introduced into the pigment dispersant as a constituent of the polyol as mentioned above, for example as a monoester of a saturated or unsaturated fatty acid with glycerol, trimethylol propane or trimethylol ethane; or as a mono- or di-ester of a saturated or unsaturated fatty acid and pentaerythritol.

Suitable diisocyanates include tolylene diisocyanate as the 2:4- or 2:6-isomers and mixtures

thereof; hexamethylene diisocyanate; diphenylmethane diisocyanate; and isophorone diisocyanate. Suitable triisocyanates include adducts of diisocyanates with polyols, for example adducts of tolylene diisocyanate or hexamethylene diisocyanate with trimethylolpropane.

The interaction of the materials (a), (b) and (c), optionally material (d) and optionally other materials is carried out under conditions which are appropriate to the reaction between an isocyanate group and the isocyanate-reactive group X, which is preferably a hydroxyl group, to form a urethane group. An important aspect of this invention is that there appears to be little reaction between an isocyanate group and the carboxyl group of the carboxylic acid (a) at temperatures not greater than about 150°C, although preferably the temperature of interaction is not greater than about 130°C and more preferably not greater than 100°C. The proportions of the ingredients are selected by conventional procedures for the preparation of polyurethanes and preferably so that after the reaction there is a negligible residue of unreacted isocyanate groups. Preferably the molecular weight of the polymeric pigment dispersant is greater than 2,000 and more preferably in the range 3,000 - 10,000.

The selection of an appropriate carboxylic acid, aliphatic polyol, di- or tri-isocyanate and optional $C_{8-20}$ aliphatic hydrocarbon moiety will depend, for example, upon the nature of the pigment to be dispersed and upon the nature of the aqueous medium in which dispersion is to be achieved. There must be taken into account the known principles whereby a suitable balance of hydrophilic/lyophilic properties is achieved in the final

polymer whilst ensuring the necessary dispersibility of the polymer in the aqueous medium.

Preferably the pigment dispersant has an acid value of 15-100 mg KOH/g and more preferably of 25-60 mg KOH/g. The polymeric dispersant is dispersible in aqueous medium in the presence of a base. Useful bases include, for example, ammonia; primary amines such as triethylamine; hydroxy amines such as 2-amino-propanol, dimethylaminoethanol and mono-, di- and tri-ethanolamine. Inorganic bases may also be used. In general the dispersant is neutralised with such bases to a pH in the range 5.5 to 9.0, preferably 7.0 to 8.5.

The dispersed pigment concentrate may comprise water and/or a wide range of non-aqueous liquids for example ethylene or propylene glycols; monohydric alcohols, for example ethanol or isopropanol; glycol ethers, for example methyl or butyl "Cellosolve" and propylene glycol monoethyl ether. After the reaction between materials (a), (b) and (c) has been effected it is usual then to remove unwanted solvent and to add water or other appropriate solvent and desired base to produce a solution of dispersant which is suitable for combination with a pigment to produce the dispersed pigment concentrate. The solution of the dispersant and the pigment may be mixed and dispersed by any conventional technique, for example by bead milling or ball milling.

Suitable pigments include phthalocyanine blue and green pigments, titanium dioxide, iron oxide pigments and azo pigments. Extenders may also be present such as talc, china clay, barytes and chalk. Particularly appropriate pigments are the phthalocyanine pigments and the aryl amido azo pigments.

The dispersed pigment concentrates of this invention have notable advantages over the commercially available concentrates, for example those based on water-dispersible polyesters. They have high tinctorial strength and may contain a high level of pigment; the dispersant polymer has good hydrolytic stability and is compatible with a wide range of other water-dispersible polymers; and, particularly in coatings produced from emulsion paints, the dispersant polymer provides good resistance to the effects of water such as pigment leaching.

Suitable coating materials which may be present in coating compositions according to the invention include polymers or copolymers prepared by emulsion, dispersion or solution polymerisation of for example, vinyl acetate and other vinyl esters, (meth)acrylic acids and esters thereof, styrene, ethylene, vinylidene chloride and mixtures of these monomers. Condensation polymers may also be used. The emulsion polymers are particularly suitable in the formulation of coating compositions according to the invention.

Printing inks according to the invention may comprise a pigment concentrate together with one or more soluble or water-insoluble polymers and any other conventional additive.

The invention is illustrated by the following Examples in which parts and percentages are by weight unless otherwise stated :

EXAMPLE 1

This Example illustrates the preparation of pigment dispersants according to the invention.

(a) 600 parts of polypropylene glycol (molecular weight 400) were charged to a reaction vessel fitted with a stirrer, reflux condenser, dropping funnel and thermometer. 80 parts of dimethylol propionic acid was added and the mixture heated to 110°C when a clear solution resulted. 70 parts of hexamethylene diisocyanate were added slowly from the dropping funnel whilst holding the temperature at 110°C. A hazy solution was formed initially which cleared during the course of the addition. The temperature of the reaction mixture was lowered to 70°C and a further 216 parts of the isocyanate were added. Stirring and heating were continued until the isocyanate content of the product was less than 0.1%. The product, which was a pale amber-coloured viscous liquid, had an acid value of 34.8 mg KOH/g and it was dissolved in 966 parts of water and 30 parts of 0.880 ammonia. A clear solution of low viscosity resulted, which had a pH of 8.5.

(b) 600 parts of polypropylene glycol (of molecular weight 400) and 80 parts of dimethylol propionic acid were charged to a suitable vessel and the mixture heated to 110°C to produce a clear solution. 75 parts of tolylene diisocyanate, (a commercial mixture of the 2:4 and 2:6 isomers), were added slowly from the dropping funnel whilst holding the temperature at 100°C. The initial hazy solution cleared during the course of the addition after which the temperature of the

reaction mixture was reduced to 70°C and a further 221 parts of the isocyanate added. Stirring and heating were continued until the isocyanate content of the product was less than 0.1%. The product was an amber-coloured liquid of high viscosity having an acid value of 34.4 mg KOH/g. It was dissolved in 976 parts of water and 53 parts dimethylamino ethanol. A low viscosity clear solution resulted.

(c) 600 parts of polypropylene glycol (molecular weight 400) and 80 parts dimethylol propionic acid were charged to a vessel and raised to 110°C to produce a clear solution, 94 parts of 3 isocyanatomethyl-3,5,5 trimethyl cyclohexyl isocyanate were added slowly whilst holding the temperature at 100°C. The initial hazy solution cleared during the course of the addition, after which the temperature of the reaction was lowered to 70°C and a further 283 parts of isocyanate added. Stirring and heating were continued until the isocyanate content of the product was less than 0.1%. The viscous liquid product had an acid value of 31.8 mg KOH/g and it was dissolved in 1057 parts water and 24g sodium hydroxide.

(d) To a flask was charged 600 parts polypropylene glycol (of molecular weight 400), 114 parts propylene glycol, 121 parts dimethylol propionic acid, 18.4 parts glycerol and 186 parts castor oil. The temperature was raised to 100°C to produce a clear solution. A solution of 600 parts tolylene diisocyanate in 346 parts ethyl acetate

was added slowly whilst maintaining a reaction temperature of 100°C. Stirring and heating was maintained until the residual isocyanate content was below 0.1%. The acid value of the product was 31 mg KOH/g. 600 parts of the product was charged to a flask with 162 parts water and 30 parts 880 ammonia solution and the ethyl acetate removed.

(e) 608 parts of soya monoglyceride prepared by alcoholysis of 1 mole soya bean oil and two moles of glycerol using calcium naphthenate as catalyst was charged to a flask. To this was added 400 parts polypropylene glycol (of molecular weight 400) and 170 parts dimethylol propionic acid. The temperature was raised to 120°C and kept at this temperature for 15 minutes to produce a hazy solution. 100 parts of tolylene diisocyanate was added slowly whilst the temperature of reaction was maintained at 120°C. During this time the solution cleared. The temperature of reaction was reduced to 100°C and 317 parts ethyl acetate added. A further 456 parts of isocyanate was added and the reaction temperature held between 95°-100°C. Stirring and heating was maintained until the residual isocyanate content was less than 0.1%. The product had an acid value of 41.6 mg KOH/g. 250 parts of water was added to the product and the temperature raised to remove the ethyl acetate by azeotropic distillation. When neutralised with 118 parts of dimethylaminoethanol the product was capable of further dilution with water.

(f) 400 parts of polypropylene glycol (of molecular weight 400) was charged to a flask. To this was added 152 parts of a coconut oil fatty amine/ ethylene oxide adduct(in a molar ratio of 1:2), commercially available as "Ethomeen C/12") and 67 parts dimethylol propionic acid. The temperature of the mixture was raised to 100°C and a clear solution resulted. A solution of 278 parts of tolylene diisocyanate in 384 parts of ethyl acetate was added slowly whilst the temperature of reaction was maintained at 90°C. Heating and stirring was maintained until the residual isocyanate content was less than 0.1%. To 960 parts of this polymer solution at 70% solids was added 320 parts of water and 40 parts of '880' ammonia solution and the mixture charged to a flask. The temperature was raised and ethyl acetate removed as an azeotrope to give a 65% solution of the polymer (acid value 31 mg KOH/g) in water.

## EXAMPLE 2

This Example illustrates the hydrolytic stability of pigment dispersants according to the invention.

Two pigment dispersants prepared as in Examples 1(b) and (c) respectively, were dissolved in water containing ammonia to give clear solutions at 30% solids. The samples were stored at 40°C for one month. After this time the acid value of the samples had increased by 18.5% and 30.1% respectively representing absolute increases in acid value of 6mg KOH/g and 9mg KOH/g respectively. Samples of the dispersants prepared in Examples 1(a), (b) and (c) were solubilised in aqueous ammonia to give clear solutions at

50% solids, and were stored at ambient temperature. After storage for 1 year the acid value increase was as given below:-

| | Example | Initial A/V | Increase |
|---|---|---|---|
| | 1(a) | 33.6 mg KOH/g | 5.6 mg KOH/g |
| Dispersant | 1(b) | 34.0 mg KOH/g | 0.8 mg KOH/g |
| | 1(c) | 31.8 mg KOH/g | 1.8 mg KOH/g |

## EXAMPLE 3

This Example illustrates the superior hydrolytic stability of pigment dispersants according to the invention as compared with known polyester pigment dispersants.

(a) A water-soluble polyester was prepared by condensing together at 180°C, 1.5 moles of glycerol, 1.7 moles of dimethylol propionic acid, 2.5 moles of adipic acid and 3 moles of soya bean oil fatty acids until an acid value of 80mg KOH/g was reached. 100 parts of the product were dissolved in 66 parts of ethyl "Cellosolve", 84 parts of water and 13.3 parts od dimethylaminoethanol to give a clear solution at 40% solids and a pH of 8.5.

(b) A polyester was prepared by condensing 6 moles of trimethylolpropane, 5.3 moles of isophthalic acid and 3 moles of soya bean oil fatty acids at 240°C until the reaction product had an acid value of 6-8 mg KOH/g. The reaction temperature was lowered to 150°C and 1.25 moles of trimellitic anhydride added. Reaction was allowed to continue until an acid value of 55 mg KOH/g was obtained. 100 parts of the product were dissolved in 66 parts of ethyl "Cellosolve", 84 parts of water and

92 parts of dimethylaminoethanol to give a clear solution having a pH of 8.7.

Samples of the solution obtained in (a) and (b) above and a sample of the solution of polyurethane dispersant prepared in Example 1(a) were stored at 40$^{o}$C for 1 month. After this time, the acid value of the dissolved polyurethane of Example 1(a) had increased by 7%, i.e. an increase of 2.4 mg KOH/g, and the pH had decreased from 8.5 to 7.85. The two polyesters described in (a) and (b) above showed acid value increases of 150% and 27% respectively. This represents acid value increases of 40 and 14.0 mg KOH/g respectively. In both cases the pH decreased to 5.5 and both samples (a) and (b) had separated into two immiscible phases.

## EXAMPLE 4

This Example illustrates the preparation of dispersed pigment concentrates according to the invention.

(a) A dispersed pigment concentrate was prepared by dispersing a phthalocyanine pigment, commercially available as "Monastral" Blue FBN ("Monastral" is a Registered Trade Mark of ICI Ltd), in a solution of a water soluble pigment dispersant having the molar formula;
polypropylene glycol (molecular weight 400)/ dimethylol propionic acid/tolylene diisocyanate = 1.5/0.6/1.7; and prepared according to Example 1. The polymer had been neutralised with a stoichiometric amount (+ 6% excess) of dimethylaminoethanol and had been dissolved in ethoxyethanol to 60% solids. The solution had been further diluted to 30% solids with water before dispersing the pigment.

The pigment/binder ratio of the final paste was 1:1 and the concentrate had a viscosity of 2-3 poise.

(b) A pigment paste was prepared by "bead milling" an azo pigment commercially available as "Monolite" Yellow 10G ("Monolite" is a Registered Trade Mark of ICI Ltd) in a 30% solids solution of a pigment dispersant of polypropylene glycol (molecular weight 400)/castor oil/dimethylpropionic acid/tolylene diisocyanate = 2/0.4/1/2.9 and was neutralised with ammonia. The dispersant was prepared according to Example 1. The pigment/binder ratio of the final paste was 3:1 and it had a viscosity of 2-3 poise.

(c) A dispersed pigment concentrate similar to that described in (a) above was prepared except that the blue pigment was dispersed at a pigment/binder ratio of 1:1 in a 30% solids of a pigment dispersant of molar formula :

polypropylene glycol (molecular weight 400)/dimethylol propionic acid/soya bean oil monoglyceride/tolylene diisocyanate = 1/1.7/1.27/3.2. The polymer was neutralised with dimethylaminoethanol and dissolved in a mixture of 1:1 ethoxy ethanol and water.

The fluid paste obtained had a viscosity of 2-3 poise.

EXAMPLE 5

This Example illustrates the preparation of an aqueous pigmented coating composition according to the invention and a comparison of this composition with an aqueous pigmented coating composition which contained a conventional pigment dispersant.

A mid-sheen emulsion paint was prepared from an 80/20 polymer of vinyl acetate/vinyl "Versatate" (the vinyl ester of "Versatic" acid available from Shell) and was pigmented with titanium dioxide and china clay to a pigment volume concentration of 27%.

One sample of the emulsion paint was tinted with 5% by weight of a commercially available dispersed pigment concentrate based on a "Monastral" Blue pigment and another sample was tinted with a dispersed pigment concentrate prepared according to Example 4(a) above, such that both samples had the same tinctorial strength. The two paint samples were applied to a hardboard substrate to produce coating films. Both had the same degree of colour development after drying for 48 hours. They were then exposed horizontally to conditions of high humidity such that considerable condensation occurred on the surface.

Examination of the films showed that in the case of the paint containing the conventional pigment paste concentrate considerable leaching and staining had occurred, whereas the film containing the dispersed pigment concentrate according to the invention showed only minimal traces of staining and leaching.

## EXAMPLE 6

This Example describes the preparation of aqueous printing ink concentrates to which is added a film-forming polymer, and which can be diluted if desired, to provide printing inks according to the invention:

(a) 62.7 parts of a basic lead chromate pigment were dispersed in a ball-mill with 12.12 parts of the dispersant prepared in Example 1(e) in 16.97 parts of water to the fineness required and the product was further stabilised by the addition of a further 3.42 parts of the Example 1(e) dispersant and 4.49 parts water.

(b) 21.8 parts of a monoazo yellow pigment were dispersed in a ball-mill with 30.36 parts of the dispersant of Example 1(e) and 42.5 parts of water to the fineness required and diluted with 5.34 parts water.

## EXAMPLE 7

This Example describes the preparation of a pigment dispersant according to the invention in which the polyol is propylene glycol.

A water-dispersible polymer was prepared by reacting, in the manner described in Example 1(a), 152 parts propylene glycol, 134 parts dimethylol propionic acid, 358 parts soya bean oil monoglyceride and 479 parts of a commercial mixture of 2:4- and 2:6- tolylene diisocyanate.

The initial temperature of reaction was 130°C and this was then dropped to 70°C once the initial hazy solution had become clear. The resulting polymer contained 25.3% by weight of soya bean oil fatty acids and had an

acid value of 50 mg KOH/g.

A sample of the polymer, when diluted with ethoxyethanol to 60% solids and the acid content neutralised with the stoichiometric amount of ammonia, gave a product which could be readily diluted with water to produce a clear solution even at low solids content.

PV. 30734

**WE CLAIM:**

1. A polymeric water-dispersible pigment dispersant, characterised in that it is prepared by interacting at a temperature of not greater than 150°C, materials which comprise
   (a) a carboxylic acid of structure

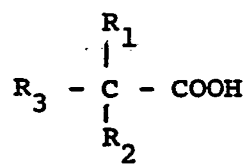

   wherein $R_1$ and $R_2$ = $C_n H_{2n}$ X, the same or different and wherein n = 1-8 and X is a group reactive with an isocyanate group, and wherein $R_3$ is a $C_{1-8}$ alkyl or substituted alkyl group,
   (b) an aliphatic polyol, and
   (c) a di- or tri- isocyanate
2. A dispersant according to claim 1 which comprises a $C_{8-20}$ aliphatic hydrocarbon moiety.
3. A dispersant according to claim 2, wherein the aliphatic hydrocarbon moiety is contained in a further interacting material (d).
4. A dispersant according to claim 3, wherein the further interacting material (d) is a natural oil or a derivative thereof.
5. A dispersant according to any one of claims 1 to 4, wherein the group X is a hydroxyl group.
6. A dispersant according to any one of claims 1 to 5, wherein the carboxylic acid is dimethylolpropionic acid.
7. A dispersant according to any one of claims 1 to 6, wherein the polyol is a diol.

8. A dispersed pigment concentrate which comprises water and/or a liquid miscible with water, pigment and a water-dispersible polymeric pigment dispersant according to any one of claims 1 to 7.

9. An aqueous pigmented coating composition which comprises water, pigment, a water-dispersible polymeric pigment dispersant according to any one of claims 1 to 7, and a coating material.

10. An aqueous pigmented coating composition according to claim 9, wherein the coating material is a film-forming polymer prepared by emulsion polymerisation.

11. An aqueous printing ink which comprises water, pigment, a water-dispersible polymeric dispersant according to any one of claims 1 to 7, and a film-forming polymer.